(19) Europäisches Patentamt
European Patent Office
Office européen des brevets

(11) **EP 4 488 716 B1**

(12) **EUROPEAN PATENT SPECIFICATION**

(45) Date of publication and mention
of the grant of the patent:
**08.04.2026 Bulletin 2026/15**

(51) International Patent Classification (IPC):
**G01S 13/04** *(2006.01)*   **G01S 13/18** *(2006.01)*
**G01S 13/10** *(2006.01)*

(21) Application number: **24185895.0**

(52) Cooperative Patent Classification (CPC):
**G01S 13/04; G01S 13/103; G01S 13/18**

(22) Date of filing: **02.07.2024**

(54) **METHOD FOR DETERMINING THE PRESENCE OF AN ASSEMBLAGE OF OBJECTS, IN PARTICULAR PEOPLE, IN AN AREA**

**VERFAHREN ZUR BESTIMMUNG DES VORHANDENSEINS EINER ANSAMMLUNG VON GEGENSTÄNDEN, INSBESONDERE VON PERSONEN, IN EINEM BEREICH**

**PROCÉDÉ DE DÉTERMINATION DE LA PRÉSENCE D'UN ENSEMBLE D'OBJETS, EN PARTICULIER DE PERSONNES, DANS UNE ZONE**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **03.07.2023 IT 202300013815**

(43) Date of publication of application:
**08.01.2025 Bulletin 2025/02**

(73) Proprietor: **Vimar S.p.A.**
**36063 Marostica (VI) (IT)**

(72) Inventors:
• **MARIO, Andrea**
**25046 Cazzago San Martino (BS) (IT)**
• **POZZA, Paolo**
**36063 Marostica (VI) (IT)**
• **BETTIN, Nicola**
**35010 Carmignano di Brenta (PD) (IT)**
• **CACCIATORI, Alessio**
**25135 Brescia (BS) (IT)**

(74) Representative: **Locas, Davide**
**Cantaluppi & Partners S.r.l.**
**Piazzetta Cappellato Pedrocchi, 18**
**35122 Padova (IT)**

(56) References cited:
• **CHOI JAE-HO ET AL: "People Counting Using IR-UWB Radar Sensor in a Wide Area", IEEE INTERNET OF THINGS JOURNAL, IEEE, USA, vol. 8, no. 7, 21 October 2020 (2020-10-21), pages 5806 - 5821, XP011845949, DOI: 10.1109/JIOT.2020.3032710**
• **CHOI JEONG WOO ET AL: "People Counting Based on an IR-UWB Radar Sensor", IEEE SENSORS JOURNAL, IEEE, USA, vol. 17, no. 17, 1 September 2017 (2017-09-01), pages 5717 - 5727, XP011658473, ISSN: 1530-437X, [retrieved on 20170809], DOI: 10.1109/JSEN.2017.2723766**
• **XIUZHU YANG ET AL: "Dense People Counting Using IR-UWB Radar with a Hybrid Feature Extraction Method", ARXIV.ORG, CORNELL UNIVERSITY LIBRARY, 201 OLIN LIBRARY CORNELL UNIVERSITY ITHACA, NY 14853, 18 June 2018 (2018-06-18), XP081140499, DOI: 10.1109/LGRS.2018.2869287**

**Description**

Technical field

The present invention relates to a method and a device for determining the presence of an assemblage of objects, in particular persons, in an area.

Technological background

The invention is used particularly, though not exclusively, in the technical field relating to the detection of persons present inside a predetermined area by using radar signals.

Generally, the persons can be spaced apart from each other inside an area or can be gathered in one or more zones so as to form respective masses.

To this end, the Applicant has observed that there is increasingly perceived the need to avoid situations of assemblages of persons in rooms or spaces of public or private buildings, such as, for example, offices or shops, because they are promoters of possible contagions which are potentially dangerous to health.

Known techniques of "people counting" are described in the following publications:

- CHOI JAE-HO ET AL: "People Counting Using IR-UWB Radar Sensor in a Wide Area", IEEE INTERNET OF THINGS JOURNAL, IEEE, USA, vol. 8, no. 7, 21 October 2020 (2020-10-21), pages 5806-5821, DOI: 10.1109/J 10T.2020.3032710,

- CHOI JEONG WOO ET AL: "People Counting Based on an IR-UWB Radar Sensor", IEEE SENSORS JOURNAL, IEEE, USA, vol. 17, no. 17, 1 September 2017 (2017-09-01), pages 5717-5727, ISSN: 1530-437X, DOI: 10.1109/JSEN.2017.2723766, and

- XIUZHU YANG ET AL: "Dense People Counting Using IR-UWB Radar with a Hybrid Feature Extraction Method", ARXIV.ORG, CORNELL UNIVERSITY LIBRARY, 201 OLIN LIBRARY CORNELL UNIVERSITY ITHACA, NY 14853, 18 June 2018 (2018-06-18), , DOI: 10.1109/LGRS.2018.2869287.

However, the Applicant has found that the current technical solutions based on radar signals do not seem to be particularly suitable for defining assemblage situations.

In particular, the Applicant has found that the current technical solutions based on radar signals require the use of control units having a relatively high calculation capacity.

Therefore, the Applicant has understood the opportunity and need for determining the presence of the above-mentioned assemblages using radar signals.

The technical problem addressed by the present invention is therefore to provide a method and a device for determining the presence of an assemblage of objects in an area which is structurally and functionally configured to at least partially overcome one or more of the disadvantages set out with reference to the cited prior art. In the context of this problem, an object of the present invention is to provide a method and a device for determining in a particularly reliable manner the presence of an assemblage of objects in an area.

Another object of the present invention is to provide a method for determining the presence of an assemblage of objects in an area which can be carried out by means of a device which is relatively economical to construct and/or having a calculation capacity which is relatively low.

Another object of the present invention is to provide a device for determining the presence of an assemblage of objects in an area which is relatively economical to construct and/or having a calculation capacity which is relatively low.

Another object of the present invention is to provide a device for determining the presence of an assemblage of objects in an area which allows the privacy of the users to be respected as far as possible.

This problem is solved and at least one of these objects is/are at least partially achieved by the invention by means of a method and a device for determining the presence of an assemblage of objects in an area according to one or more of the respective appended claims.

In the present description, as well as in the claims appended thereto, some terms and expressions are considered to assume, unless explicitly indicated otherwise, the significance expressed in the following definitions.

The term "object" is preferably intended to be understood to be a living being, more preferably a person.

Statement of invention

In a first aspect thereof, the invention is directed towards a method for determining the presence of an assemblage of objects in an area.

Preferably, the area is a predetermined zone of known extent.

The method comprises transmitting into the area a radar signal comprising a sequence of pulses which are spaced apart by a predefined time.

The pulses are energy pulses which are characterized by known magnitude and duration.

Preferably, the magnitude of the pulses is greater than or equal to -1 dBm (that is to say, $dB_{mW}$) and/or less than or equal to 20 dBm.

Preferably, the duration of the pulses is greater than or equal to 1 ns and/or less than or equal to 15 ns.

Preferably, the repetition period of the pulses is greater than or equal to 20 ns and/or less than or equal to 200 ns.

Preferably, the radar signal is a UWB signal.

The method further comprises receiving an electromagnetic signal comprising echo signals indicative of at least one reflection of respective pulses of the radar signal by one or more objects in the area.

Preferably, the transmission of pulses alternates with the receiving of the echo signals, that is to say, the receiving of an echo signal of a first pulse occurs between the transmission thereof and the transmission of a second pulse following the first pulse.

Preferably, the echo signals are one after the other.

The method further comprises sampling the received echo signals so as to obtain respective discrete signals comprising a plurality of samples.

In particular, the discrete signals are one after the other over time.

By way of example, the method provides for obtaining at least fifteen discrete signals per second.

Preferably, the discrete signals each comprise N samples, N being a number greater than one.

The number N is preferably a function of a sampling frequency of the discrete signals and the maximum distance at which an object can be detected with respect to the transmitter of the radar signal. For each of the discrete signals, the method provides for determining a relevant plurality of consecutive main ranges of N1 samples of this discrete signal, N1 being an integer greater than one.

Preferably, N1 is less than N, more preferably the ratio between N1 and N is less than or equal to 0.5, more preferably 0.35, and/or greater than or equal to 0.10, more preferably 0.19.

Preferably, N1 is greater than or equal to 40, and/or less than or equal to 120.

For each of the main ranges of a discrete signal, the method provides for:

- determining a relevant first energy on the basis of the magnitude values of the samples included in the main range in such a manner that the first energy is indicative of the energy of the discrete signal within this main range,
- determining a relevant plurality of second energies on the basis of the magnitude values of the samples included within respective consecutive secondary ranges of N2 samples of this discrete signal in such a manner that the second energies indicate the energy of the discrete signal inside the respective secondary ranges, N2 being an integer greater than one and less than N1,
- determining a relevant energy index on the basis of a comparison, preferably of the ratio, between the second energies and the first energy of this main range,

wherein the secondary ranges are at least partially included in this main range.

In this manner, for each main range there are determined a relevant first energy, relevant second energies and a relevant energy index. Preferably, the ratio between N1 and N2 is less than or equal to 10 and/or greater than or equal to 2. By way of example, the ratio between N1 and N2 may be 2.8.

The method further comprises determining whether an assemblage of objects is present in the area on the basis of the energy indexes (all or a subset thereof) of the discrete signals (all or a subset thereof).

Preferably, the energy index may take up a value within a predetermined range and the value of the energy index may be determined so that it is proportional to the probability of crowding of objects in the area: for example, the greater is the energy index, the higher will be the possibility that there is an assemblage.

By way of example, the energy index may take up a value within the range [0, 1] or [0, 100], including the extremes.

Therefore, the group of energy indexes is advantageously indicative of the presence or not of an assemblage in the area. Preferably, the step of determining whether an assemblage of objects is present in the area comprises:

- determining an assemblage index which correlates (in particular is proportional) with the sum of the energy indexes, and

- determining that an assemblage of objects is present in the area if the assemblage index is greater than or equal to a predetermined threshold.

Preferably, the assemblage index is included in a predetermined range which is defined between a minimum value and a maximum value. Preferably, the predetermined threshold is greater than or equal to 30%, more preferably it may be equal to one of 35%, 40%, 65%, 70%, 75% and 80%, of the maximum value which the assemblage index may take up.

Preferably, this predetermined threshold can be imposed by a user of a device which is configured to carry out the above-described method.

Preferably, the method comprises mapping (more preferably, according to a monotone function) the set of energy indexes in a finite set of predefined values so as to obtain a second set of energy indexes, the finite set of predefined values having cardinality less than that of the mapped set.

The set of values in which the energy indexes are mapped is therefore characterized by a cardinality less than that of the set of energy indexes. This advantageously allows a reduction in the calculation and memory capacity of a device which is configured to carry out the above-described method.

Preferably, the finite set of predefined values may have a cardinality of 2, 4, 8.

Preferably, if the above-mentioned cardinality is 2, then the energy indexes are mapped at 0 or 1. In particular, an energy index is mapped at 0 if it is less than 40%, more preferably of 20% or 15%, of the maximum value which can be taken up by the energy indexes and mapped at 1 in the opposite case.

Preferably, if the above-mentioned cardinality is 4, then the energy indexes are mapped at 0, 1, 2 or 3 on the basis of a comparison of the energy indexes with predetermined thresholds. Preferably, if the above-mentioned cardinality is 8, then the energy indexes are mapped at 0, 1, 2, 3, 4, 5, 6 or 7 on the basis of a comparison of the energy indexes with predetermined thresholds. More generally, the energy indexes are mapped in a finite set of predefined values on the basis of a comparison of the energy indexes with predetermined thresholds.

Preferably, the method further comprises generating a signal which indicates the presence of an assemblage on the basis of the determination as to whether an assemblage of objects is present in the area.

Preferably, this signal is at least one of a data signal (for example, intended to be stored in a storage unit of an electronic device), a visual signal, an acoustic signal, an electric signal, radio wave.

Preferably, the visual signal and/or acoustic signal are perceptible to at least one person, in particular to at least one person present in the area.

Preferably, the method provides for generating this signal if it is determined that an assemblage of objects is present in the area. Preferably, the method provides for generating the signal indicating the presence of an assemblage so that the signal has a first value if it is determined that an assemblage of objects is present in the area and a second value, which is different from the first value, if it is not determined that an assemblage of objects is present in the area.

Therefore, the method according to the invention advantageously allows an assemblage to be identified using a radar signal and preferably the presence or not of an assemblage to be signalled. In particular, the steps of determining the energy indexes and the potential processing thereof allow the presence of an assemblage of objects in the above-mentioned area to be determined in a particularly reliable manner.

Furthermore, the fact of determining a plurality of main ranges for each of the discrete signals allows the provision of a method for determining the presence of an assemblage of objects which can be carried out by means of a device which is relatively economical to construct and/or having a calculation capacity which is relatively low.

Using a radar signal instead of a camera further avoids recording "sensitive" images and/or personal images of users who are subjected to the radar signal, thereby respecting the privacy thereof.

In a second aspect thereof, the present invention is directed towards a device for determining the presence of an assemblage of objects in an area.

The device for determining the presence of an assemblage of objects in an area comprises an antenna device and a processing unit. The antenna device is configured to transmit into the area a radar signal which comprises a sequence of pulses which are spaced apart by a predefined time and to receive an electromagnetic signal comprising echo signals indicative of the reflection of respective pulses of the radar signal by one or more objects in the area. The processing unit is operatively connected to the antenna device and is configured to carry out the method as set out above and preferably as specified below.

Therefore, the device allows the presence of an assemblage of objects in the above-mentioned area to be determined in a particularly reliable manner. Furthermore, the fact of determining a plurality of main ranges for each of the discrete signals allows the provision of a processing device which is relatively economical to construct and/or having a calculation capacity which is relatively low.

Preferably, the antenna device comprises a first antenna which is configured to transmit the radar signal into the area and a second antenna which is configured to receive the electromagnetic signal. In this case, the first antenna preferably acts as a transmitter for the radar signal and the second antenna preferably acts as a receiver for the electromagnetic signal.

Alternatively to the first antenna and the second antenna mentioned above, the antenna device may comprise an antenna which is configured both to transmit the radar signal into the area and to receive the electromagnetic signal. In this case, the antenna preferably acts as a transmitter for the radar signal and as a receiver for the electromagnetic signal.

Preferably, the device for determining the presence of an assemblage of objects in an area or at least the antenna device is configured to be installed and/or fixed to a support, more preferably to a wall which delimits the area.

Preferably, the support is a substantially vertical, planar or curved element.

Preferably, the wall laterally delimits the area.

Preferably, the wall is a substantially vertical, planar or curved element, more preferably of a building.

Preferably, the device for determining the presence of an assemblage of objects in an area or at least the antenna device is positioned at a height greater than or equal to 1.0 m from a lower surface which delimits the area in the lower region, more preferably at a height greater than or equal to 1.5 m from the lower surface, even more preferably at a height between 1.5 and 2.0 m from the lower surface.

Preferably, the device for determining the presence of an assemblage of objects in an area or at least the antenna device is positioned and/or orientated in such a manner that the volume of space covered by the radar signal covers the area except for any blind sectors.

In at least one of the above-mentioned aspects, the present invention may further have at least one of the preferred features set out below.

Preferably, the method provides for a step of decluttering of at least one of the electromagnetic signal, the echo signals and the discrete signals so as to eliminate one or more echo signals and/or one or more discrete signals which are indicative of the reflection of respective pulses of the radar signal by one or more static objects, that is to say, by objects which do not have any movement during the transmission of the radar signal with respect to a known reference, for example, with respect to a transmitter of the radar signal.

In particular, a person who is stationary in a zone of the area which is subjected to the radar signal is not considered to be a static object because his/her respiration involves the movement of at least a portion of his/her body. Preferably, the presence of an assemblage of objects in the area is determined on the basis of a comparison of the energy indexes (all or a subset thereof) with at least one predetermined value.

Preferably, the predetermined value is a parameter which can be imposed, for example, by a user of the device, in accordance with the extent of the area which is subjected to the radar signal and/or the dimensions of the mass of objects which has to be considered to be an assemblage.

In at least one embodiment of the present invention, the main ranges overlap one to another so as to have N3 samples in common between two overlapped main ranges, N3 being an integer greater than one and less than N1.

These overlaps involve a specific interdependence between the first energies of two consecutive main ranges precisely as a result of the N3 samples in common, consequently increasing the reliability of the determination of an assemblage of objects in the area.

Preferably, the ratio between N3 and N1 is preferably at least 0.5, more preferably it is at least 0.9, even more preferably it is at least 0.95.

Preferably, the method provides for determining a second energy for each sample of at least one of the main ranges, preferably of each main range.

In at least one embodiment of the present invention, at least one of the energy indexes (preferably each energy index) is correlated with the maximum value taken up by the ratio between the second energies and the first energy of the relevant main range (that is to say, the main range associated with this energy index).

In at least one embodiment of the present invention, at least one of the energy indexes (preferably each energy index) is proportional, preferably inversely proportional, to the maximum value taken up by the ratio between the second energies and the first energy of the relevant main range to the at least one of the energy indexes.

Advantageously, the maximum value of the ratio between the second energies and the first energy of a main range is indicative of the energy distribution therein.

In particular, the absence of peaks of second energies in a main range is indicative of a particularly uniform distribution of the energy of the discrete signal in this main range which can be attributed to a possible condition of crowding of objects in the area.

Vice versa, the presence of one or more peaks of second energies in a main range is indicative of at least one concentration of energy of the discrete signal in this main range which can be attributed to a possible condition of non-crowding of objects in the area.

In at least one embodiment of the present invention, the method comprises determining K main ranges and consequently K respective first energies for at least one of the discrete signals, preferably for each discrete signal, K being an integer greater than 1.

Preferably, the k-th first energy of a discrete signal is determined according to the formula

$$E1 = \sum_{i=0}^{N1-1} x_i^2$$

where E1 is the first energy, $x_i$ represents the magnitude of the i-th sample of the k-th main range, k being a whole number belonging to the range [0, K-1], including the extremes.

In at least one embodiment of the present invention, the method comprises determining N1 second energies for at least one of the main ranges, preferably for each main range.

Preferably, the i-th second energy of a main range is determined according to the formula

$$E2 = x_i^2 * rect(i/N2)$$

where E2 is the second energy, $x_i$ represents the magnitude of the i-th sample of this main range, i being a whole number belonging to the range [0, N1-1], including the extremes, and * denotes the convolution product.

In an alternative embodiment of the invention, the method may comprise determining N6 second energies (where N6 is greater than one and less than N1) for at least one of the main ranges, preferably for each main range. In this case, the N6 second energies correspond to a subset of the N1 second energies determined above.

In at least one embodiment of the present invention, the energy index of at least one of the main ranges, preferably of each main range, is determined according to the formula

$$DI = 1 - max(E2'/E1),$$

where DI is the energy index, E2' and E1 represent the set of the second energies (preferably of all the second energies) and the first energy of this main range, respectively, and max(E2'/E1) corresponds to the maximum value taken up by the ratio between the second energies of the set E2' and the first energy of this main range.

In this case, DI will be within the range of values [0, 1], including the extremes.

Consequently, the energy index, that is to say, the value thereof, will be greater the more limited is the value max(E2'/E1). The absence of peaks of second energies involves a value of max(E2'/E1) which is limited, and therefore a greater value of the energy index which defines a condition of possible crowding of objects in the area.

In at least one embodiment of the present invention, the step of determining whether an assemblage of objects is present in the area preferably comprises one of the following alternative procedures:

Procedure 1:

a) obtaining a plurality of groups of discrete signals (for example, at least fifteen), each group comprising a plurality of successive discrete signals (for example, at least five), wherein for each group of discrete signals:

- defining a matrix of energy indexes, wherein the values of each row (or column) of the matrix correspond to the succession of energy indexes of a relevant discrete signal of this group,
- optionally mapping the energy indexes of the matrix in a finite set of N4 predefined values (preferably N4 is less than the cardinality of the set of the energy indexes mapped, more preferably N4 is 2, 4 or 8) so as to obtain a second matrix of energy indexes,
- obtaining a plurality of sub-matrixes of the matrix, or the second matrix if obtained, by selecting therefrom a predefined number of consecutive columns (or rows), the sub-matrixes being at least partially different from each other,
- determining for the sub-matrixes respective second energy indexes so as to obtain a succession of second energy indexes, wherein each second energy index is proportional to the sum of the values of the relevant sub-matrix, and
- optionally mapping the second energy indexes in a finite set of N5 predefined values (preferably N5 is less than the cardinality of the set of the second energy indexes mapped, more preferably N5 is 2, 4 or 8) so as to obtain a second succession of second energy indexes,

b) defining a matrix of second energy indexes, wherein the values of each row (or column) of the matrix correspond to the succession, or the second succession if obtained, of second energy indexes of the relevant group of discrete signals,

c) obtaining a plurality of sub-matrixes of the matrix of second energy indexes by selecting therefrom a predefined number of consecutive columns (or rows), the sub-matrixes being at least partially different from each other,

d) determining for the sub-matrixes of the matrix of second energy indexes respective third energy indexes so as to obtain a succession of third energy indexes, wherein each third energy index is proportional to the sum of the values of the relevant sub-matrix,

e) calculating the maximum value of the succession of third energy indexes,

f) repeating, preferably at least thirty times, the steps a)-e) so as to obtain a succession of maximum values, wherein the step of obtaining a plurality of groups of discrete signals comprises obtaining new groups of discrete signals which are different from the preceding ones and wherein at least one of the new groups of discrete signals comprises a new discrete signal following the preceding ones, and

g) determining that an assemblage of objects is present in the area if at least one of the values of the succession of maximum values is greater than a predetermined threshold, or generating an assemblage index by applying a median filter with a predetermined dimension to the succession of maximum values and determining that an assemblage of objects is present in the area if the assemblage index is greater than a predetermined threshold.

If the presence of an assemblage of objects is determined without using the median filter, then each value of the succession of maximum values of Procedure 1 may be considered to be an assemblage index.

Preferably, the succession of maximum values defines a data signal which is updated for each calculation of a maximum value and the median filter is applied to the data signal for each update thereof. Preferably, the groups of discrete signals of Procedure 1 are partially overlapped among them.

Procedure 2:

a) obtaining a plurality of groups of discrete signals (for example, at least fifteen), each group comprising a plurality of successive discrete signals (for example, at least five), wherein for each group of discrete signals:

- defining a matrix of energy indexes, wherein the values of each row (or column) of the matrix correspond to the succession of energy indexes of a relevant discrete signal of this group,
- optionally mapping the energy indexes of the matrix in a finite set of N4 predefined values (preferably N4 is less than the cardinality of the set of the energy indexes mapped, more preferably N4 is 2, 4 or 8) so as to obtain a second matrix of energy indexes,

- obtaining a plurality of sub-matrixes of the matrix, or the second matrix if obtained, by selecting therefrom a predefined number of consecutive columns (or rows), the sub-matrixes being at least partially different from each other,
- determining for the sub-matrixes respective second energy indexes so as to obtain a succession of second energy indexes, wherein each second energy index is proportional to the sum of the values of the relevant sub-matrix, and
- optionally mapping the second energy indexes in a finite set of N5 predefined values (preferably N5 is less than the cardinality of the set of the second energy indexes mapped, more preferably N5 is 2, 4 or 8) so as to obtain a second succession of second energy indexes,

b) defining a matrix of second energy indexes, wherein the values of each row (or column) of the matrix correspond to the succession, or the second succession if obtained, of second energy indexes of the relevant group of discrete signals,
c) determining for the matrix of second energy indexes a third energy index, the third energy index being proportional to the sum of the values of the matrix of second energy indexes,
d) repeating, preferably at least thirty times, the steps a)-c) so as to obtain a succession of third energy values, wherein the step of obtaining a plurality of groups of discrete signals comprises obtaining new groups of discrete signals which are different from the preceding ones and wherein at least one of the new groups of discrete signals comprises a new discrete signal following the preceding ones,
e) determining that an assemblage of objects is present in the area if at least one third energy index of the succession of third energy indexes is greater than a predetermined threshold, or generating an assemblage index by applying a median filter with a predetermined dimension to the succession of third energy indexes and determining that an assemblage of objects is present in the area if the assemblage index is greater than a predetermined threshold.

If the presence of an assemblage of objects is determined without using the median filter, then each third energy index of the succession of third indexes of Procedure 2 may be considered to be an assemblage index.
Preferably, the succession of third energy indexes defines a data signal which is updated for each calculation of a third energy index and the median filter is applied to the data signal for each update thereof.
Preferably, the groups of discrete signals of Procedure 2 are partially overlapped among them.

Procedure 3:

a) obtaining a group of discrete signals comprising a plurality of successive discrete signals (for example, at least seventy five),
b) defining a matrix of energy indexes, wherein the values of each row (or column) of the matrix correspond to the succession of energy indexes of a relevant discrete signal of this group,
c) optionally mapping the energy indexes of the matrix in a finite set of N4 predefined values (preferably N4 is less than the cardinality of the set of the energy indexes mapped, more preferably N4 is 2, 4 or 8) so as to obtain a second matrix of energy indexes,
d) determining for the matrix, or the second matrix if obtained, a second energy index, the second energy index being proportional to the sum of the values of the matrix or the second matrix, if provided,
e) repeating, preferably at least thirty times, the steps a)-d) so as to obtain a succession of second energy indexes, wherein the step of obtaining a plurality of groups of discrete signals comprises obtaining new groups of discrete signals which are different from the preceding ones and wherein at least one of the new groups of discrete signals comprises a new discrete signal following the preceding ones,
f) determining that an assemblage of objects is present in the area if at least one second energy index of the succession of second energy indexes is greater than a predetermined threshold, or generating an assemblage index by applying a median filter with a predetermined dimension to the succession of second energy indexes and determining that an assemblage of objects is present in the area if the assemblage index is greater than a predetermined threshold.

If the presence of an assemblage of objects is determined without using the median filter, then each second energy index of the succession of second indexes of Procedure 3 may be considered to be an assemblage index.
Preferably, the succession of second energy indexes defines a data signal which is updated for each calculation of a second energy index and the median filter is applied to the data signal for each update thereof.
Preferably, the groups of discrete signals of Procedure 3 are partially overlapped among them.
Preferably, the sub-matrixes of the step a) of Procedures 1 and 2 comprise all the rows (or columns) of the relevant matrix (or second matrix, if obtained) and/or are at least partially overlapped among them.
Preferably, the sub-matrixes of the step a) of Procedures 1 and 2 are determined in such a manner that each column of the relevant matrix (or second matrix, if obtained) belongs to at least one sub-matrix.

Preferably, N4 is 2. In this case, the energy indexes are mapped at 0 or 1. Preferably, an energy index is mapped at 0 if it is less than 40%, more preferably less than 20% or 15% of the maximum value which can be taken up by the energy indexes and mapped at 1 in the opposite case. More generally, the energy indexes are mapped in a finite set of N4 predefined values on the basis of a comparison of the energy indexes with predetermined thresholds.

Preferably, the second energy indexes each correspond to the ratio between the sum of the values of the relevant sub-matrix (or matrix, or second matrix if obtained in the case of Procedure 3) and the product of the dimension of this sub-matrix (or matrix, or second matrix if obtained in the case of Procedure 3) and the maximum value which can be taken up by the energy indexes of the relevant matrix (or second matrix if obtained), this ratio where applicable being multiplied by one hundred.

Preferably, the sub-matrixes of the step c) of Procedure 1 comprise all the rows (or columns) of the relevant matrix and/or are overlapped among them.

Preferably, the sub-matrixes of the step c) of Procedure 1 are determined in such a manner that each column of the relevant matrix belongs to at least one sub-matrix.

Preferably, N5 is 2. In this case, the second energy indexes are mapped at 0 or 1. Preferably, an energy index is mapped at 0 if it is less than 60%, more preferably less than 30% or 20% of the maximum value which can be taken up by the second energy indexes and mapped at 1 in the opposite case. More generally, the second energy indexes are mapped in a finite set of N5 predefined values on the basis of a comparison of the energy indexes with predetermined thresholds.

Preferably, the third energy indexes each correspond to the ratio between the sum of the values of the relevant sub-matrix (or matrix of second energy indexes in the case of Procedure 2) and the product of the dimension of this sub-matrix (or matrix of second energy indexes in the case of Procedure 2) and the maximum value which can be taken up by the second energy indexes of the relevant matrix, this ratio where applicable being multiplied by one hundred. Preferably, the predetermined threshold is greater than or equal to 30%, more preferably it may be equal to one of 35%, 40%, 65%, 70%, 75% and 80% of the maximum value which the third energy index can take up.

It must further be noted that the values of the rows (or columns) of the matrixes and sub-matrixes which are defined above are preferably representative of the presence of objects in the area involved in the radar signal in relation to the spatial distance from the transmission location of the radar signal and/or receiving location of the electromagnetic signal; and/or that the values of the columns (or rows) of the matrixes and sub-matrixes defined above are preferably representative of the presence of objects in the area involved in the radar signal in relation to the time elapsed from the start of the method according to the invention.

In particular, the provision of the sub-matrixes allows a better reliability to be obtained for the information extracted from the third energy indexes. In at least one embodiment of the present invention, the method comprises installing and/or fixing an antenna device to a support, preferably to a wall which delimits the area, the antenna device being configured to transmit the radar signal and to receive the electromagnetic signal.

In at least one embodiment of the present invention, the method comprises positioning the device in order to determine the presence of an assemblage of objects in an area or at least the antenna device at a height greater than or equal to 1.0 m from a lower surface which delimits in the lower region the area, more preferably at a height greater than or equal to 1.5 m from the lower surface, even more preferably at a height between 1.5 and 2.0m from the lower surface.

In at least one embodiment of the present invention, the method comprises positioning and/or orientating the device in order to determine the presence of an assemblage of objects in an area or at least the antenna device in such a manner that the volume of space covered by the radar signal covers the area, except for any blind sectors.

Brief description of the drawings

The features and advantages of the present invention will be better appreciated from the detailed description of preferred embodiments thereof which are illustrated by way of non-limiting example with reference to the appended drawings, in which:

- Figure 1 is a schematic view from above of an area comprising a plurality of objects and a device for determining the presence of an assemblage of objects in this area according to an embodiment of the invention,
- Figure 2 is a schematic representation of a radar signal transmitted by the device of Figure 1,
- Figure 3 is a schematic representation of an electromagnetic signal received by the device of Figure 1,
- Figure 4 is a schematic representation of a discrete signal determined by a method for determining the presence of an assemblage of objects in an area according to an embodiment of the invention,
- Figures 5A-5C show representative graphs of signals and indexes which are determined in a first case by a method for determining the presence of an assemblage of objects in an area according to an embodiment of the invention,
- Figures 6A-6C show representative graphs of signals and indexes which are determined in a first case by a method for determining the presence of an assemblage of objects in an area according to an embodiment of the invention,

- Figure 7 shows a flow chart representing a method for determining the presence of an assemblage of objects in an area according to an embodiment of the invention, and
- Figure 8 is a schematic representation of a number of passages of the method of Figure 7.

Description of embodiments of the invention

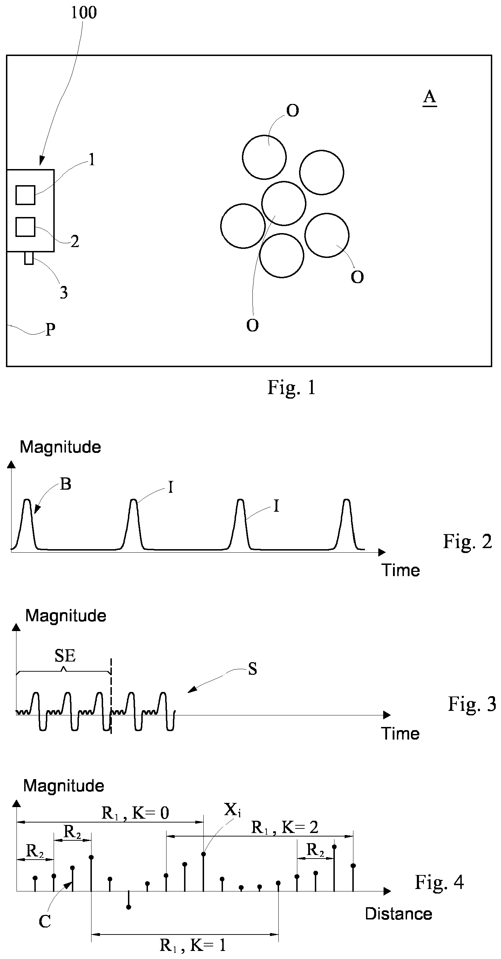

With reference to the appended Figures, there is generally designated 100 a device for determining the presence of an assemblage of objects O, in particular persons, in an area A. With particular reference to Figure 1, the device 100 comprises an antenna device 1 and a processing unit 2. The antenna device 1 is configured to transmit into the area A a radar signal B, such as preferably a UWB signal, which comprises a sequence of pulses I which are spaced apart by a predefined time and to receive an electromagnetic signal S comprising echo signals SE which indicate the reflection of respective pulses I of the radar signal B by one or more objects O which are arranged in the area A.

The processing unit 2 is operatively connected to the antenna device 1 and is configured to carry out a method 200 in order to determine the presence of an assemblage of objects O in the area described below. The antenna device 1 may comprise one or more antennae for transmitting the radar signal B and the reception of the electromagnetic signal S. The device 100 is preferably fixed to a wall P which laterally delimits the area at a height between 1.0 and 2.2 m from a surface which delimits it in the lower region. The method 200 comprises a step S1 of transmitting into the area A the radar signal B and a step S2 of receiving the electromagnetic signal S, wherein the transmission of pulses I preferably alternates with the reception of the echo signals SE.

Figures 2 and 3 are schematic representations of the radar signal B and the electromagnetic signal S, respectively.

The method 200 further comprises a step S3 of sampling the received echo signals SE so as to obtain respective discrete signals F each comprising N samples C, where N is preferably equal to 360 for a detection distance of 5 metres.

Preferably, the method 200 provides for a step of decluttering of the discrete signals F so as to eliminate one or more discrete signals which are indicative of the reflection of respective pulses I of the radar signal B by one or more static objects.

For each of the discrete signals F, the method 200 comprises a step S4 of determining K consecutive main ranges R1 of N1 samples C of this discrete signal F, where K is preferably 72 for a detection distance of 5 metres and N1 is preferably 70. Therefore, a main range R1 comprises a vector of N1 samples C, that is to say, it comprises the vector (C_0, **...** Cn, **...** C_N1-1), where C_n is the n-th sample of this main range R1.

Furthermore, the step S4 therefore provides for determining a vector of K main ranges R1 for a discrete signal, that is to say, the vector (R1_0, ..., R1_k, ..., R1_K-1), where R1_k is the k-th main range of this discrete signal F.

Figure 4 is a schematic representation of the discrete signal F and three main ranges R1 thereof, wherein one main range preferably overlaps another one so as to have three samples in common between two overlapped main ranges.

For each of the main ranges R1 of a discrete signal F, the method comprises a step S5 of:

- determining a relevant first energy E1 on the basis of the magnitude values of the samples C included in the main range R1 in such a manner that the first energy E1 is indicative of the energy of this discrete signal F within this main range,
- determining a relevant plurality of second energies E2 on the basis of the magnitude values of the samples C included within respective consecutive secondary ranges R2 of N2 samples of this discrete signal in such a manner that the second energies E2 indicate the energy of the discrete signal inside the respective secondary ranges R2, where N2 is preferably 25 and the secondary ranges R2 are at least partially included in this main range R1,
- determining a relevant energy index DI on the basis of the ratio between the second energies E2 and the first energy E1 of this main range R1.

Therefore, the step of determining a first energy E1 for each of the main ranges R1 of a discrete signal F provides for determining a vector (E1_0, ..., E1_k, ..., E1_K-1) of K first energies E1, where E1_k is the k-th first energy of this discrete signal F. Preferably, the k-th first energy E1, that is to say, E1_k, of a discrete signal F is determined according to the formula

$$E1\_k = \sum_{i=0}^{N1-1} x_i^2$$

where $x_i$ represents the magnitude of the i-th sample C of the k-th main range R1 of this discrete signal.

The step of determining a plurality of secondary ranges R2 and second energies E2 instead provides for determining for each main range R1 a vector of secondary ranges R2 and a vector of relevant second energies E2.

In specific terms, the step S5 preferably provides for determining a secondary range for each sample C of the main range R1, that is to say, the determination of a vector (R2_0, ..., R2_i, ..., R2_N1-1) of N1 secondary ranges R2, where R2_i is the i-th secondary range of this main range R1.

In this case, therefore, the step S5 preferably provides for determining a second energy for each sample C of the main range R1, that is to say, determining a vector (E2_0, ..., E2_i, ..., E2_N1-1) of N1 second energies E2, where E2_i is the i-th second energy of this main range R1.

Preferably, the i-th second energy E2, that is to say, E2_i, of a k-th main range R1 is determined according to the formula

$$E2\_i = \ x_i^2 * rect(i/N2)$$

where $x_i$ represents the magnitude of the i-th sample C of the k-th main range R1.

It must further be noted that the step of determining an energy index DI for each of the main ranges R1 of a discrete signal therefore involves determining a vector (DI_0, ..., DI_k, ..., DI_K-1) of K energy indexes DI, where DI_k is the k-th energy index of this discrete signal F.

Preferably, the k-th energy index DI, that is to say, DI_k, of a discrete signal F is determined according to the formula

$$DI\_k = \ 1 - max(E2'/E1\_k)$$

where E2' represents the set of the second energies E2 of the k-th main range R1 of this discrete signal and E1_k is the k-th first energy E1 of this discrete signal.

Therefore, the value of each energy index DI will be included within the range [0, 1], including the extremes.

In particular, this set of second energies corresponds to the vector (E2_0, ..., E2_i, ..., E2_N1-1) of the above-mentioned main range R1.

The method 200 therefore allows the determination of a vector (DI_0, ..., DI_k, ..., DI_K-1) for each discrete signal F by consequently obtaining a matrix of energy indexes, the rows (or columns) of which correspond to the vector (DI_0, ..., DI_k, ..., DI_K-1) of respective discrete signals F.

The method 200 further comprises a step S6 of determining whether an assemblage of objects O is present in the area A on the basis of the energy indexes DI of the discrete signals F.

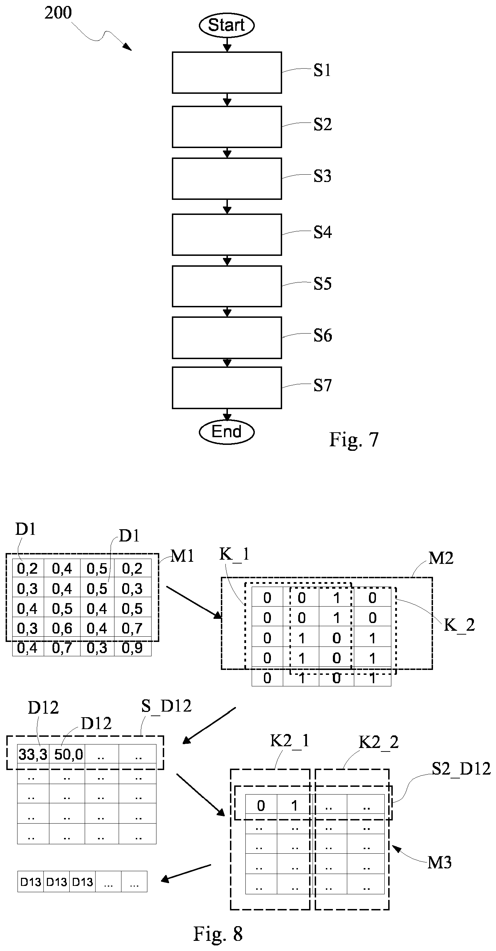

With particular reference to Figure 8, the step S6 preferably comprises:

    a) obtaining a plurality of groups of discrete signals, each group comprising a plurality of successive discrete signals F, wherein for each group of discrete signals:

- defining a matrix M1 of energy indexes DI,
- mapping the energy indexes of the matrix M1 in a finite set of 2 predefined values (in particular, the energy indexes less than 0.5 are mapped at 0 while those greater than or equal to 0.5 are mapped at 1) so as to obtain a second matrix M2 of energy indexes,

- obtaining a plurality of sub-matrixes (also called kernels), in the specific case characterized by four rows and three columns, of the second matrix M2 by selecting therefrom a predefined number of consecutive columns, the sub-matrixes K_1, K_2, K_j, ... being at least partially different from each other,
- determining for the sub-matrixes K_1, K_2, K_j, ... respective second energy indexes DI2 so as to obtain a succession S_DI2 of second energy indexes, wherein each second energy index is calculated according to the following formula: $DI2 = (100/12) \ x \ \Sigma a_{i,j}$, where $\Sigma a_{i,j}$ represents the sum of the values of the relevant sub-matrix, and
- mapping the second energy indexes in a finite set of 2 predefined values (in particular, the second energy indexes less than 0.5 are mapped at 0 while those greater than or equal to 0.5 are mapped at 1) so as to obtain a second succession S2_DI2 of second energy indexes DI2,

b) defining a matrix M3 of second energy indexes, wherein the values of each row of the matrix correspond to the second succession of second energy indexes DI2 of the relevant group of discrete signals,
c) obtaining a plurality of sub-matrixes, in the specific case characterized by five rows and two columns, of the matrix of second energy indexes by selecting therefrom a predefined number of consecutive columns, the sub-matrixes K2_1, K2_2, .... K_j, ... being at least partially different from each other,
d) determining for the sub-matrixes K2_1, K2_2, .... K_j, ... respective third energy indexes DI3, wherein each third energy index is calculated according to the following formula: $DI3 = (100/10) \ x \ \Sigma b_{i,j}$, where $\Sigma b_{i,j}$ represents the sum of the values of the relevant sub-matrix,
e) calculating the maximum value of the succession of third energy indexes,
f) repeating the steps a)-e) so as to obtain a succession of maximum values, wherein the step of obtaining a plurality of groups of discrete signals comprises obtaining new groups of discrete signals which are different from the preceding ones and wherein at least one of the new groups of discrete signals comprises a new discrete signal following the preceding ones, and
g) generating an assemblage index by applying a median filter with a predetermined dimension (for example, of thirty) to the succession of maximum values and determining that an assemblage of objects is present in the area if the assemblage index is greater than a predetermined threshold (for example, the predetermined threshold is equal to 70% of the maximum value which the assemblage index can take up and which, for the specific example, is 100).

The method 200 further comprises a step S7 of generating a signal, preferably a visual and/or acoustic signal, which indicates the presence of an assemblage on the basis of the determination of the step S6.

Preferably, this signal is generated by an output interface 3 of the device 100.

By way of example, this signal is preferably generated if it is determined that an assemblage of objects is present in the area. Alternatively or additionally, the step S7 provides for generating this signal so that it has a first value if it is determined that an assemblage of objects is present in the area (assemblage condition) and a second value, which is different from the first value, if it is not determined that an assemblage of objects is present in the area (non-assemblage condition).

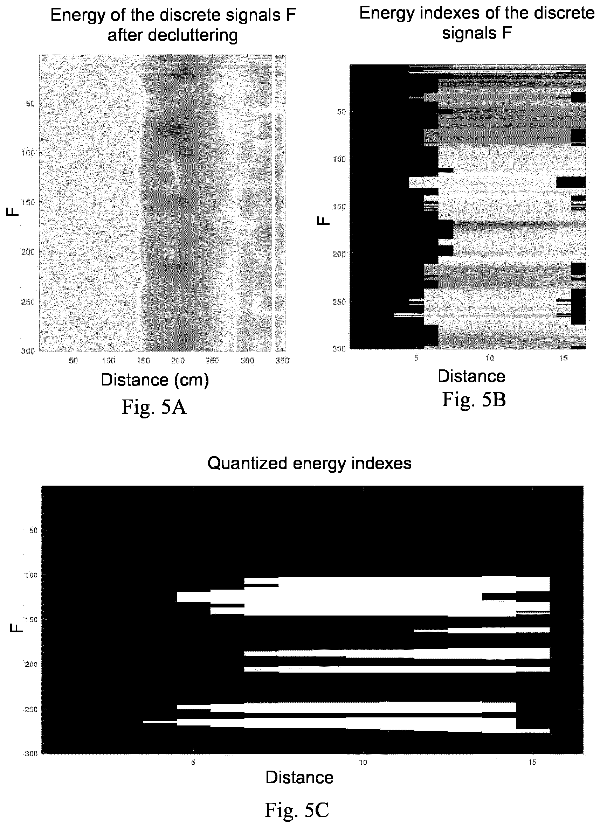

Figures 5A-5C show representative graphs of the energy values of the discrete signals F, the values of the energy indexes and the values of the energy indexes which are quantized in a first case, in which a single person (object O) is present in the area A.

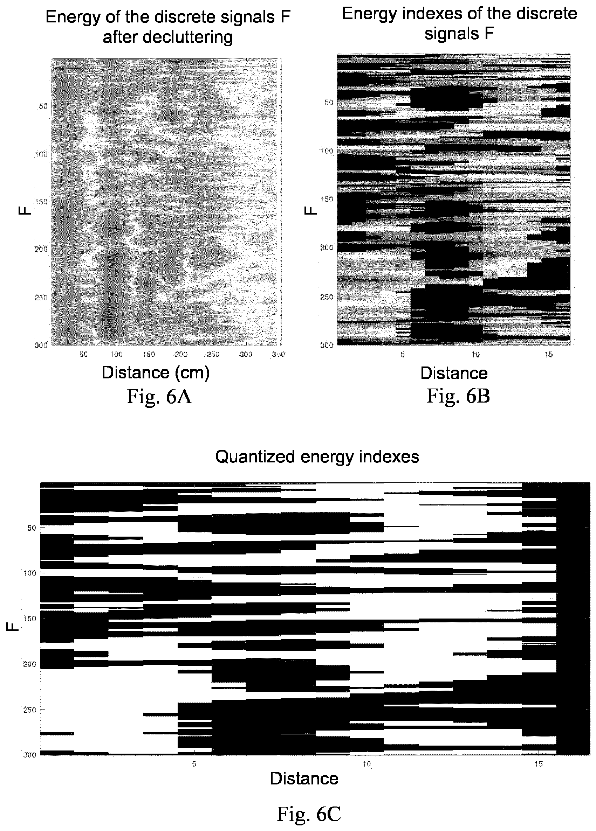

Conversely, Figures 6A-6C show representative graphs of the energy values of the discrete signals F, the values of the energy indexes and the values of the energy indexes which are quantized in a second case, in which a plurality of persons (objects O) are present in the area A.

In particular, Figures 5A and 6A represent the energy values of 300 discrete signals F as a function of the distance of objects from the device 100 in the first case and in the second case, respectively.

Figures 5B and 6B instead represent the values of the energy indexes DI of 300 discrete signals F in the first case and in the second case, respectively.

Finally, Figures 5C and 6C represent the values of the energy indexes which are quantized of 300 discrete signals F in the first case and in the second case, respectively, where the white surface of the graphs represents the energy indexes which are quantized with a value 1 while the black surface represents the energy indexes which are quantized with the value O.

It may immediately be noted that in Figure 6C the quantity of white surface is greater with respect to that present in Figure 5C, a fact which allows a non-assemblage condition to be determined in the first case and an assemblage condition in the second case.

**Claims**

1. Method for determining the presence of an assemblage of objects (O) in an area (A), the method (200) comprising:

• transmitting into the area a radar signal (B) comprising a sequence of pulses (I) which are spaced apart by a predefined time,
• receiving an electromagnetic signal (S) comprising echo signals (SE) indicative of at least one reflection of respective pulses of the radar signal by one or more objects in the area,
• sampling the received echo signals (SE) so as to obtain respective discrete signals (F) comprising a plurality of samples (C), wherein for each of the discrete signals (F) the method comprises:

• determining a relevant plurality of consecutive main ranges (R1) of N1 samples of this discrete signal, N1 being an integer greater than one, **characterized in that**, for each of the main ranges (R1) of this discrete signal, the method further comprises:

• determining a relevant first energy (E1) on the basis of the magnitude values of the samples (C) included in the main range (R1) in such a manner that the first energy (E1) is indicative of the energy of the discrete signal (F) within this main range,
• determining a relevant plurality of second energies (E2) on the basis of the magnitude values of the samples included within respective consecutive secondary ranges (R2) of N2 samples of this discrete signal in such a manner that the second energies (E2) indicate the energy of the discrete signal (F) inside the respective secondary ranges, N2 being an integer greater than one and less than N1, wherein the secondary ranges (R2) are at least partially included in this main range (R1), and
• determining a relevant energy index (DI) on the basis of a comparison between the second energies and the first energy of this main range,

• determining whether an assemblage of objects (O) is present in the area (A) on the basis of the energy indexes (DI) of the discrete signals (F),
• generating a signal which indicates the presence of an assemblage on the basis of the determination as to whether an assemblage of objects (O) is present in the area (A).

2. Method according to claim 1, wherein the energy index relative to a main range is a function of a ratio between the second energies and the first energy of the main range.

3.  Method according to claim 1 or 2, wherein determining whether an assemblage of objects (O) is present in the area (A) comprises:

    • determining an assemblage index which correlates with the sum of the energy indexes, and
    • determining that an assemblage of objects is present in the area if the assemblage index is greater than or equal to a predetermined threshold,

    wherein the assemblage index is proportional to the sum of the energy indexes.

4.  Method according to any one of the preceding claims, wherein the method comprises mapping the set of energy indexes in a finite set of predefined values so as to obtain a second set of energy indexes, the finite set of predefined values having cardinality less than that of the mapped set.

5.  Method according to any one of the preceding claims, wherein the main ranges (R1) overlap one to another so as to have N3 samples in common between two overlapped main ranges, N3 being an integer greater than one and less than N1, wherein the ratio between N3 and N1 is preferably at least equal to 0.5, more preferably it is at least equal to 0.9, even more preferably it is at least equal to 0.95.

6.  Method according to any one of the preceding claims, wherein at least one of the main ranges (R1) comprises N1 secondary ranges (R2) .

7.  Method according to any one of the preceding claims, wherein at least one of the energy indexes (DI) is correlated with the maximum value taken up by the ratio between the second energies and the first energy of the relevant main range.

8.  Method according to any one of the preceding claims, wherein at least one of the energy indexes (DI) is proportional to the maximum value taken up by the ratio between the second energies and the first energy of the main range relative to the at least one of the energy indexes (DI).

9.  Method according to any one of the preceding claims, wherein the method comprises determining N1 second energies for at least one of the first ranges, wherein the i-th second energy of a first range is determined according to the formula

$$E2\_i = x_i^2 * rect(i/N2),$$

where $x_i$ represents the magnitude of the i-th sample of this first range, i being a whole number belonging to the range [0,N1-1], including the extremes.

10. Method according to any one of the preceding claims, wherein the energy index (DI) of at least one of the main ranges is determined according to the formula

$$DI = 1 - max(E2'/E1),$$

where E2' and E1 represent the set of the second energies and the first energy of this main range, respectively.

11. Method according to any one of the preceding claims, comprising installing and/or fixing an antenna device (1) to a support, preferably to a wall (P) which delimits the area (A), wherein the antenna device is configured to transmit the radar signal (B) and to receive the electromagnetic signal (S).

12. Device for determining the presence of an assemblage of objects (O) in an area (A), the device (100) comprising:

    • an antenna device (1) which is configured to transmit into the area a radar signal (B) which comprises a sequence of pulses (I) which are spaced apart by a predefined time and to receive an electromagnetic signal (S) comprising echo signals (SE) indicative of the reflection of respective pulses of the radar signal by one or more objects in the area, and **characterized in that** the device further comprises
    • a processing unit (2) which is operatively connected to the antenna device and which is configured to carry out the method according to any one of claims 1 to 11.

**Patentansprüche**

1.  Verfahren zum Bestimmen der Anwesenheit einer Ansammlung von Objekten (O) in einem Bereich (A), wobei das Verfahren (200) aufweist:

    • Senden eines Radarsignals (B) in den Bereich, das eine Folge von Impulsen (I) aufweist, die um eine vorbestimmte Zeit voneinander beabstandet sind,
    • Empfangen eines elektromagnetischen Signals (S), das Echosignale (SE) aufweist, die zumindest eine Reflexion der jeweiligen Impulse des Radarsignals durch ein oder mehrere Objekte in dem Bereich anzeigen,
• Abtasten der empfangenen Echosignale (SE), um entsprechende diskrete Signale (F) zu erhalten, die eine Mehrzahl von Abtastwerten (C) aufweisen, wobei das Verfahren für jedes der diskreten Signale (F) aufweist:

• Bestimmen einer relevanten Mehrzahl von aufeinanderfolgenden Hauptbereichen (R1) von N1-Abtastwerten dieses diskreten Signals, wobei **N1** eine ganze Zahl größer als eins ist, **dadurch gekennzeichnet, dass** das Verfahren für jeden der Hauptbereiche (R1) dieses diskreten Signals ferner aufweist:

• Bestimmen einer relevanten ersten Energie (E1) auf der Grundlage der Größenwerte der im Hauptbereich (R1) enthaltenen Abtastwerte (C) in der Weise, dass die erste Energie (E1) die Energie des diskreten Signals (F) innerhalb dieses Hauptbereichs angibt,
• Bestimmen einer relevanten Mehrzahl von zweiten Energien (E2) auf der Grundlage der Größenwerte der Abtastwerte, die in den jeweiligen aufeinanderfolgenden Sekundärbereichen (R2) von N2-Abtastwerten dieses diskreten Signals in der Weise enthalten sind, dass die zweiten Energien (E2) die Energie des diskreten Signals (F) innerhalb der jeweiligen Sekundärbereiche angeben, wobei N2 eine ganze Zahl größer als eins und kleiner als N1 ist, wobei die Sekundärbereiche (R2) zumindest teilweise in diesem Hauptbereich (R1) enthalten sind, und
• Bestimmen eines relevanten Energieindex (DI) auf der Grundlage eines Vergleichs zwischen den zweiten Energien und der ersten Energie dieses Hauptbereichs,
• Bestimmen auf der Grundlage der Energieindizes (DI) der diskreten Signale (F), ob eine Ansammlung von Objekten (O) im Bereich (A) vorhanden ist,
• Erzeugen eines Signals, das die Anwesenheit einer Ansammlung anzeigt, auf der Grundlage der Bestimmung, ob eine Ansammlung von Objekten (O) im Bereich (A) vorhanden ist.

2. Verfahren nach Anspruch 1, wobei der Energieindex relativ zu einem Hauptbereich eine Funktion eines Verhältnisses zwischen den zweiten Energien und der ersten Energie des Hauptbereichs ist.

3. Verfahren nach Anspruch 1 oder 2, wobei ein Bestimmen, ob eine Ansammlung von Objekten (O) im Bereich (A) vorhanden ist, aufweist:

• Bestimmen eines Ansammlungsindex, der mit der Summe der Energieindizes korreliert, und
• Bestimmen, dass eine Ansammlung von Objekten im Bereich vorhanden ist, wenn der Ansammlungsindex größer oder gleich einem vorbestimmten Schwellenwert ist, wobei der Ansammlungsindex proportional zur Summe der Energieindizes ist.

4. Verfahren nach einem der vorhergehenden Ansprüche, wobei das Verfahren ein Abbilden des Satzes von Energieindizes in einem endlichen Satz vorbestimmter Werte aufweist, um einen zweiten Satz von Energieindizes zu erhalten, wobei der endliche Satz vorbestimmter Werte eine geringere Kardinalität aufweist als der abgebildete Satz.

5. Verfahren nach einem der vorhergehenden Ansprüche, wobei sich die Hauptbereiche (R1) einander überlappen, so dass N3-Abtastwerte zwischen zwei überlappenden Hauptbereichen gemeinsam sind, wobei N3 eine ganze Zahl größer als eins und kleiner als N1 ist, wobei das Verhältnis zwischen N3 und N1 vorzugsweise zumindest gleich 0,5, besonders bevorzugt zumindest gleich 0,9 und noch bevorzugter zumindest gleich 0,95 ist.

6. Verfahren nach einem der vorhergehenden Ansprüche, wobei zumindest einer der Hauptbereiche (R1) N1-Sekundärbereiche (R2) aufweist.

7. Verfahren nach einem der vorhergehenden Ansprüche, wobei zumindest einer der Energieindizes (DI) mit dem Maximalwert korreliert ist, der durch das Verhältnis zwischen den zweiten Energien und der ersten Energie des relevanten Hauptbereichs gebildet wird.

8. Verfahren nach einem der vorhergehenden Ansprüche, wobei zumindest einer der Energieindizes (DI) proportional zum Maximalwert ist, der durch das Verhältnis zwischen den zweiten Energien und der ersten Energie des Hauptbereichs relativ zu zumindest einem der Energieindizes (DI) gebildet wird.

9. Verfahren nach einem der vorhergehenden Ansprüche, wobei das Verfahren ein Bestimmen von N1 zweiten Energien für zumindest einen der ersten Bereiche aufweist, wobei die i-te zweite Energie eines ersten Bereichs nach der Formel bestimmt wird:

$$E2\_i = x_i^2 * rect(i/N2),$$

wobei $x_i$ die Größe des i-ten Abtastwertes dieses ersten Bereichs darstellt, wobei i eine ganze Zahl im Bereich [0, N1-1] einschließlich der Extremwerte ist.

10. Verfahren nach einem der vorhergehenden Ansprüche, wobei der Energieindex (DI) zumindest eines der Hauptbereiche nach der Formel bestimmt wird:

$$DI = 1 - max(E2'/E1),$$

wobei E2' und E1 den Satz der zweiten Energien bzw. der ersten Energie dieses Hauptbereichs darstellen.

11. Verfahren nach einem der vorhergehenden Ansprüche, das ein Installieren und/oder Befestigen einer Antennenvorrichtung (1) an einem Träger, vorzugsweise an einer Wand (P), aufweist, die den Bereich (A) begrenzt, wobei die Antennenvorrichtung zum Senden des Radarsignals (B) und zum Empfangen des elektromagnetischen Signals (S) eingerichtet ist.

12. Vorrichtung zum Bestimmen der Anwesenheit einer Ansammlung von Objekten (O) in einem Bereich (A), wobei die Vorrichtung (100) aufweist:

  • eine Antennenvorrichtung (1), die eingerichtet ist, um ein Radarsignal (B) in den Bereich zu senden, das eine Folge von Impulsen (I) aufweist, die um eine vorbestimmte Zeit voneinander beabstandet sind, und um ein elektromagnetisches Signal (S), das Echosignale (SE) aufweist, zu empfangen, die die Reflexion der jeweiligen Impulse des Radarsignals durch ein oder mehrere Objekte im Bereich anzeigen, und **dadurch gekennzeichnet, dass** die Vorrichtung ferner aufweist:

    • eine Verarbeitungseinheit (2), die mit der Antennenvorrichtung wirkverbunden ist und eingerichtet ist, um das Verfahren nach einem der Ansprüche 1 bis 11 auszuführen.

**Revendications**

1. Procédé pour déterminer la présence d'un assemblage d'objets (O) dans une zone (A), le procédé (200) comprenant :

  • l'émission dans la zone d'un signal radar (B) comprenant une séquence d'impulsions (I) espacées d'un temps prédéfini,

  • la réception d'un signal électromagnétique (S) comprenant des signaux d'écho (SE) indiquant au moins une réflexion des impulsions respectives du signal radar par un ou plusieurs objets dans la zone,
  • l'échantillonnage des signaux d'écho reçus (SE) de manière à obtenir des signaux discrets respectifs (F) comprenant une pluralité d'échantillons (C), le procédé comprenant pour chacun des signaux discrets (F) :

    • la détermination d'une pluralité pertinente de gammes principales consécutives (R1) de N1 échantillons de ce signal discret, N1 étant un nombre entier supérieur à un, **caractérisé en ce que**, pour chacune des gammes principales (R1) de ce signal discret, le procédé comprend en outre :

      • la détermination d'une première énergie (E1) pertinente sur la base des valeurs d'amplitude des échantillons (C) inclus dans la gamme principale (R1) de manière à ce que la première énergie (E1) soit indicative de l'énergie du signal discret (F) dans cette gamme principale,
      • la détermination d'une pluralité pertinente de secondes énergies (E2) sur la base des valeurs d'amplitude des échantillons inclus dans des gammes secondaires consécutives (R2) de N2 échantillons de ce signal discret de telle sorte que les secondes énergies (E2) indiquent l'énergie du signal discret (F) à l'intérieur des gammes secondaires respectives, N2 étant un nombre entier supérieur à un et inférieur à N1, dans lequel les gammes secondaires (R2) sont au moins partiellement incluses dans cette gamme principale (R1), et
      • la détermination d'un indice énergétique pertinent (DI) sur la base d'une comparaison entre les secondes énergies et la première énergie de cette gamme principale,
    • la détermination de la présence d'un assemblage d'objets (O) dans la zone (A) sur la base des indices énergétiques (DI) des signaux discrets (F),
    • la génération d'un signal indiquant la présence d'un assemblage sur la base de la détermination de la présence ou non d'un assemblage d'objets (O) dans la zone (A).

2. Procédé selon la revendication 1, dans lequel l'indice énergétique par rapport à une gamme principale est une fonction d'un rapport entre les secondes énergies et la première énergie de la gamme principale.

3. Procédé selon la revendication 1 ou 2, dans lequel la détermination de la présence d'un assemblage d'objets (O) dans la zone (A) comprend :

   • la détermination d'un indice d'assemblage en corrélation avec la somme des indices énergétiques, et
   • la détermination de la présence d'un assemblage d'objets dans la zone si l'indice d'assemblage est supérieur ou égal à un seuil prédéterminé, l'indice d'assemblage étant proportionnel à la somme des indices énergétiques.

4. Procédé selon l'une quelconque des revendications précédentes, dans lequel le procédé comprend la mise en correspondance de l'ensemble d'indices énergétiques dans un ensemble fini de valeurs prédéfinies afin d'obtenir un second ensemble d'indices énergétiques, l'ensemble fini de valeurs prédéfinies ayant une cardinalité inférieure à celle de l'ensemble ainsi mis en correspondance.

5. Procédé selon l'une quelconque des revendications précédentes, dans lequel les gammes principales (R1) se chevauchent l'une l'autre de manière à avoir N3 échantillons en commun entre deux gammes principales chevauchées, N3 étant un nombre entier supérieur à un et inférieur à N1, dans lequel le rapport entre N3 et N1 est de préférence au moins égal à 0,5, plus préférentiellement au moins égal à 0,9, encore plus préférentiellement au moins égal à 0,95.

6. Procédé selon l'une quelconque des revendications précédentes, dans lequel au moins une des gammes principales (R1) comprend N1 gammes secondaires (R2).

7. Procédé selon l'une quelconque des revendications précédentes, dans lequel au moins un des indices énergétiques (DI) est corrélé à la valeur maximale prise par le rapport entre les secondes énergies et la première énergie de la gamme principale concernée.

8. Procédé selon l'une quelconque des revendications précédentes, dans lequel au moins un des indices énergétiques (DI) est proportionnel à la valeur maximale prise par le rapport entre les secondes énergies et la première énergie de la gamme principale par rapport à l'au moins un des indices énergétiques (DI).

9. Procédé selon l'une quelconque des revendications précédentes, dans lequel le procédé comprend la détermination de N1 secondes énergies pour au moins l'une des premières gammes, la i-ième seconde énergie d'une première gamme étant déterminée selon la formule suivante

$$E2\_i = x_i^2 * rect(i/N2),$$

où $x_i$ représente l'amplitude du i-ième échantillon de cette première gamme, i étant un nombre entier appartenant à la gamme [0,N1-1], y compris les extrêmes.

10. Procédé selon l'une quelconque des revendications précédentes dans lequel l'indice énergétique (DI) d'au moins une des gammes principales est déterminé selon la formule suivante

$$DI = 1 - max(E2'/E1),$$

où E2' et E1 représentent respectivement l'ensemble des secondes énergies et la première énergie de cette gamme principale.

11. Procédé selon l'une quelconque des revendications précédentes, comprenant l'installation et/ou la fixation d'un dispositif d'antenne (1) sur un support, de préférence sur un mur (P) qui délimite la zone (A), dans lequel le dispositif d'antenne est configuré pour transmettre le signal radar (B) et pour recevoir le signal électromagnétique (S).

12. Dispositif pour déterminer la présence d'un assemblage d'objets (O) dans une zone (A), le dispositif (100) comprenant :

   • un dispositif d'antenne (1) configuré pour émettre dans la zone un signal radar (B) comprenant une séquence d'impulsions (I) espacées d'un temps prédéfini et pour recevoir un signal électromagnétique (S) comprenant des signaux d'écho (SE) indiquant la réflexion d'impulsions respectives du signal radar par un ou plusieurs objets dans la zone, et **caractérisé en ce que** le dispositif comprend en outre
   • une unité de traitement (2) reliée de manière opérationnelle au dispositif d'antenne et configurée pour mettre en œuvre le procédé selon l'une quelconque des revendications 1 à 11.

Fig. 1

Fig. 2

Fig. 3

Fig. 4

Energy of the discrete signals F
after decluttering

Distance (cm)

Fig. 5A

Energy indexes of the discrete
signals F

Distance

Fig. 5B

Quantized energy indexes

Distance

Fig. 5C

Energy of the discrete signals F
after decluttering

Distance (cm)

Fig. 6A

Energy indexes of the discrete
signals F

Distance

Fig. 6B

Quantized energy indexes

Distance

Fig. 6C

200

Start

S1

S2

S3

S4

S5

S6

S7

End

Fig. 7

D1    D1    M1

| 0,2 | 0,4 | 0,5 | 0,2 |
|-----|-----|-----|-----|
| 0,3 | 0,4 | 0,5 | 0,3 |
| 0,4 | 0,5 | 0,4 | 0,5 |
| 0,3 | 0,6 | 0,4 | 0,7 |
| 0,4 | 0,7 | 0,3 | 0,9 |

K_1    M2    K_2

| 0 | 0 | 1 | 0 |
|---|---|---|---|
| 0 | 0 | 1 | 0 |
| 0 | 1 | 0 | 1 |
| 0 | 1 | 0 | 1 |
| 0 | 1 | 0 | 1 |

D12    D12    S_D12

| 33,3 | 50,0 | .. | .. |
|------|------|----|----|
| .. | .. | .. | .. |
| .. | .. | .. | .. |
| .. | .. | .. | .. |
| .. | .. | .. | .. |

K2_1    K2_2    S2_D12    M3

| 0 | 1 | .. | .. |
|---|---|----|----|
| .. | .. | .. | .. |
| .. | .. | .. | .. |
| .. | .. | .. | .. |

| D13 | D13 | D13 | ... | ... |
|-----|-----|-----|-----|-----|

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- People Counting Using IR-UWB Radar Sensor in a Wide Area. **CHOI JAE-HO et al.** IEEE INTERNET OF THINGS JOURNAL. IEEE, 21 October 2020, vol. 8, 5806-5821
- People Counting Based on an IR-UWB Radar Sensor. **CHOI JEONG WOO et al.** IEEE SENSORS JOURNAL. IEEE, 01 September 2017, vol. 17, 5717-5727
- Dense People Counting Using IR-UWB Radar with a Hybrid Feature Extraction Method. **XIUZHU YANG et al.** ARXIV.ORG. CORNELL UNIVERSITY LIBRARY, 18 June 2018